# EUROPEAN PATENT APPLICATION

(11) **EP 2 416 023 A2**
(43) Date of publication of application: **08.02.2012**
(21) Application number: 11175473.5
(22) Date of filing: 26.07.2011
(51) Int. Cl.: F16C 23/10

(54) **Adjustable and lockable bushing assembly and component mounting assembly using the same**

(30) Priority: 05.08.2010 US 851320
(71) Applicant: Honeywell International, Inc., Morristown, New Jersey 07962-2245 (US)
(72) Inventor: Kowal, Adam, Morristown New Jersey 07962-2245 (US); Robbins, Rob, Morristown New Jersey 07962-2245 (US); Liston, Laurence, Morristown New Jersey 07962-2245 (US); Hein, Jeffrey, Morristown New Jersey 07962-2245 (US); Doras, Vincent, Morristown New Jersey 07962-2245 (US)
(74) Representative: Buckley, Guy Julian

(57) **Abstract**

An adjustable and lockable bushing assembly (220) includes a locking plate (302) and a bushing (304). The locking plate (302) has a bushing engagement (312) that is defined by a plurality of first serrations (314), and a boss (316) that extends axially therefrom. The bushing (304) engages the locking plate (302) and includes a concentric section, an eccentric section (322), a lock interface section (324), and an opening (326). The opening (326) has a fixed diameter and extends along a longitudinal axis (402) through the bushing (304). The concentric section (318) has an outer surface that has a circumference that is concentric with the longitudinal axis (402). The eccentric section (322) extends from the concentric section (318) has an outer surface that has a circumference that is eccentric with the longitudinal axis (404). The lock interface section (324) extends from the concentric section (318) and includes an outer surface defined by a plurality of second serrations (338) that engage the first serrations (314).

## Description

### TECHNICAL FIELD

The present invention generally relates to bushings used as part of component mounting hardware, and more particularly relates to an adjustable and lockable bushing assembly.

### BACKGROUND

Many mechanical components and mounting structures, such as those used in the aerospace industry, may be precision manufactured. Even so, these mechanical components and mounting structures still have certain manufacturing and assembly tolerances. These tolerances can impact the overall operational space envelope of the mechanical components. For example, in the context of an actuator that is configured to translate between extended and retracted positions, the manufacturing and assembly tolerances associated with the actuator and associated mounting structures and mounting hardware can impact its overall operational length.

While presently known devices are available to compensate for manufacturing and assembly tolerances, these solutions can, in many instances, rely on relatively complex components. Accordingly, it is desirable to provide relatively simple, non-complex, and inexpensive mounting hardware that provides adjustable component mounting capability to compensate for manufacturing and assembly tolerances. The present invention addresses at least this need.

### BRIEF SUMMARY

In one exemplary embodiment, an adjustable and lockable bushing assembly includes a locking plate and a bushing. The locking plate has a first side, a second side, and a bushing engagement opening that extends between the first and second sides and is defined by a plurality of first serrations. A boss extends axially from the locking plate first side and is configured to engage a stationary component. The bushing engages the locking plate and includes a concentric section, an eccentric section, a lock interface section, and an opening. The opening has a fixed diameter and extends along a longitudinal axis through the concentric section, the eccentric section, and the lock interface section. The concentric section includes a first end, a second end, and a first outer surface that has a first circumference that is concentric with the longitudinal axis. The eccentric section extends from the concentric section first end and has a second outer surface that has a second circumference that is eccentric with the longitudinal axis. The lock interface section extends from the concentric section second end and includes an outer surface defined by a plurality of second serrations. Each of the second serrations engages one of the first serrations that define the locking plate opening.

In another exemplary embodiment, a component mounting assembly includes a clevis, a component, a mount lug, and an adjustable and lockable bushing assembly. The clevis has parallel first and second arms. The first arm has a first opening extending there-through and a lock opening formed therein, and the second arm has a second opening extending there-through that is concentric with the first opening. The component has a mount portion disposed between the first and second arms and has a mount opening extending there-through. The mount lug extends through the first opening, the second opening, and the mount opening. The adjustable and lockable bushing assembly includes a locking plate and a bushing. The locking plate has a first side, a second side, and a bushing engagement opening that extends between the first and second sides and is defined by a plurality of first serrations. A boss extends axially from the locking plate first side and is disposed within the lock opening. The bushing extends through at least the first opening and the mount opening, and surrounds at least a portion of the mount lug. The bushing engages the locking plate and includes a concentric section, an eccentric section, a lock interface section, and a mount lug opening. The mount lug extends through the mount lug opening, which has a fixed diameter and extends along a longitudinal axis through the concentric section, the eccentric section, and the lock interface section. The concentric section includes a first end, a second end, and a first outer surface that has a first circumference that is concentric with the longitudinal axis. The eccentric section extends from the concentric section first end and has a second outer surface that has a second circumference that is eccentric with the longitudinal axis. The lock interface section extends from the concentric section second end and includes an outer surface defined by a plurality of second serrations. Each of the second serrations engages one of the first serrations that define the locking plate opening.

Furthermore, other desirable features and characteristics of the adjustable and lockable bushing assembly will become apparent from the subsequent detailed description of the invention and the appended claims, taken in conjunction with the accompanying drawings and this background of the invention.

### BRIEF DESCRIPTION OF THE DRAWINGS

The present invention will hereinafter be described in conjunction with the following drawing figures, wherein like numerals denote like elements, and wherein:

FIG. 1 depicts an exemplary component mounting configuration;

FIG. 2 depicts a close-up cross section view of that portion of the component mounting configuration that is encircled in FIG. 1;

FIG. 3 depicts an embodiment of an adjustable and lockable bushing assembly in its assembled state;

FIG. 4 depicts the individual components of the adjustable and lockable bushing assembly of FIG. 3;

FIG. 5 depicts an alternative embodiment of a bushing that may be used to implement the adjustable and lockable bushing assembly depicted in FIGS. 3 and 4;

FIGS. 6-8 depict a close-up cross section view similar to that depicted in FIG. 2, with the adjustable and lockable bushing assembly in different rotational positions; and

FIG. 9 depicts the different actuator lengths that may result from different rotational positions of the adjustable and lockable bushing assembly.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description. In this regard, although exemplary embodiments are described in the context of mounting an actuator, it will be appreciated that the invention may be used to mount any one of numerous devices and components.

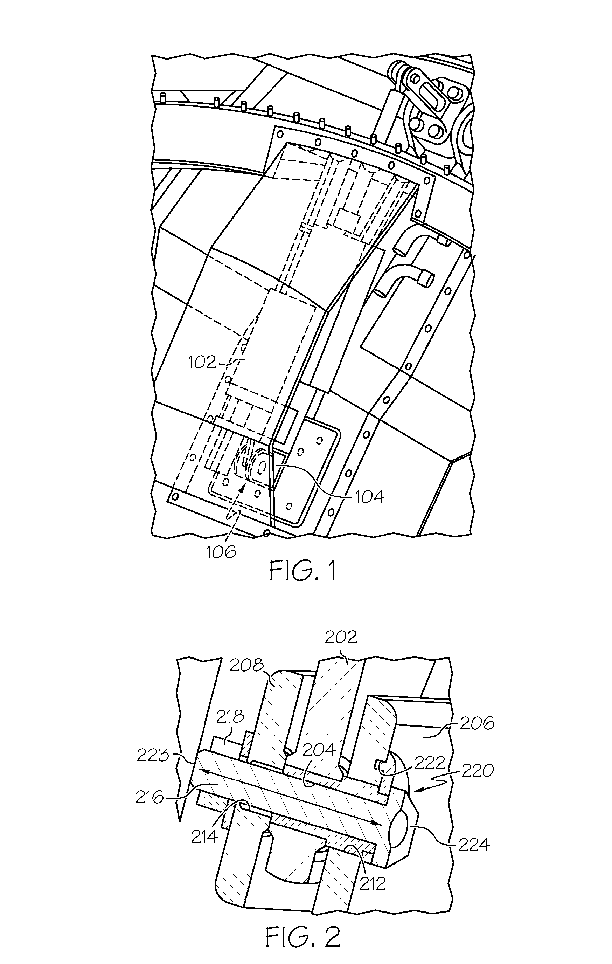

Referring now to FIG. 1, an exemplary component mounting configuration is depicted. The depicted component is an actuator 102 that is mounted on a support structure via a clevis 104 and adjustable component mounting hardware 106. It will be appreciated that the depicted actuator 102 is merely exemplary of any one of numerous components that may be mounted using the adjustable component mounting hardware 106 described herein.

As shown more clearly in FIG. 2, the actuator 102 includes a mount portion 202, through which a mount opening 204 extends. The clevis 104 includes a first arm 206 and a second arm 208, which are disposed parallel to each other. A first opening 212 extends through the first arm 206, and a second opening 214 extends through the second arm 208. The actuator mount portion 202 is disposed between the first and second arms 206, 208, and at least a portion of the adjustable mounting hardware 106 extends through the first opening 212, the second opening 214, and the mount opening 204.

The adjustable mounting hardware 106, at least in the depicted embodiment, includes at least a mount lug 216, fastening hardware 218, and an adjustable and lockable bushing assembly 220. The mount lug 216 extends through the first opening 212, the second opening 214, and the mount opening 204. The depicted mount lug 216 has a first end 223, on which non-illustrated threads are formed, and a second end 224. The fastening hardware 218, which in the depicted embodiment is a threaded nut, is threaded onto the first end of the mount lug 216. As FIG. 2 also depicts, the mount lug 216 extends through the adjustable and lockable bushing assembly 220, an embodiment of which will now be described.

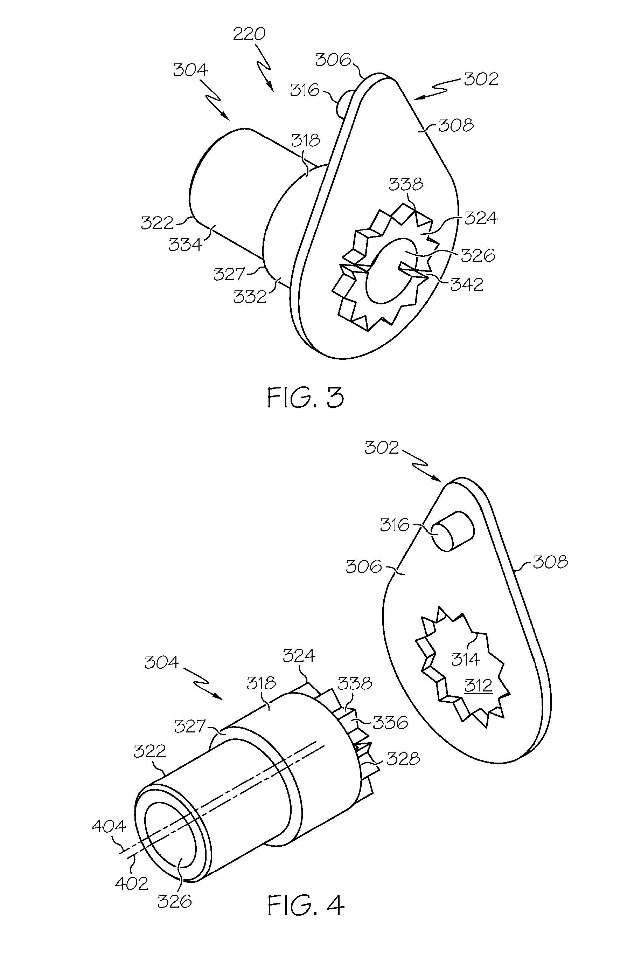

With reference now to FIGS. 3 and 4, the adjustable bushing assembly 220 includes a locking plate 302 and a bushing 304. The locking plate 302 includes a first side 306, a second side 308, and a bushing engagement opening 312. The bushing engagement opening 312 extends between the first and second sides 306, 308, and is defined by a plurality of first serrations 314. The configuration and number of first serrations 314 may vary, but in the depicted embodiment the first serrations 314 are configured as twelve evenly spaced, and generally triangle-shaped protrusions that extend radially inwardly toward the center of the bushing engagement opening 312. As will be described momentarily, the first serrations 314 engage like-configured serrations on the bushing 304 to lock the bushing 304 in place.

As FIGS. 3 and 4 also depict, a boss 316 extends axially from the locking plate first side 306. The boss 316 is configured to engage a stationary component, to thereby prevent its rotation, and concomitantly the rotation of the bushing 304. In the context of the mounting arrangement depicted in FIG. 1, and as depicted therein, the boss 316 is configured to be disposed within a lock opening 222 that is formed in the first arm 206 of the clevis 104.

Returning once again to FIGS. 3 and 4, the bushing 304 includes a concentric section 318, an eccentric section 322, a lock interface section 324, and an opening 326. The opening 326 has a fixed diameter and extends, along a first longitudinal axis 402, through the concentric section 318, the eccentric section 322, and the lock interface section 324. The concentric section 318 includes a first end 327, a second end 328, and a first outer surface 332. The first outer surface 332 has a first circumference that is concentric with the first longitudinal axis 402 and, when used in the mounting arrangement depicted in FIG. 1, is concentric with the mount lug 216 and the first opening 212 in the first arm 206.

The eccentric section 322 extends from the concentric section first end 327, and has a second outer surface 334. The second outer surface 334 has a second circumference that is eccentric with the first longitudinal axis 402 and, when used in the mounting arrangement depicted in FIG. 1, is eccentric with the mount lug 216 and the mount opening 204 in the mount portion 202 of the actuator 102. In particular, and as shown more clearly in FIG. 4, the second outer surface 334 is concentric with a second longitudinal axis 404 that is offset from the first longitudinal axis 402. It will be appreciated that the amount of eccentricity of the eccentric section 322 relative to the concentric section 318 may vary, and will depend on the desired range of adjustment of the component that is to be mounted. It will additionally be appreciated that although the second circumference, at least in the depicted embodiment, is less than the first circumference, this is merely exemplary of one embodiment. Indeed, in other embodiments, if needed or desired to match component dimensions, the second circumference could be equal to or greater than the first circumference.

The lock interface section 324 extends from the concentric section second end 328, and is configured to be disposed within the bushing engagement opening 312 of the locking plate 302. The lock interface section 324 includes an outer surface 336 that is defined by a plurality of second serrations 338. As with the first serrations 314, it will be appreciated that the configuration and number of second serrations 338 may vary, though the configuration and number should be equal to that of the first serrations 314. Thus, in the depicted embodiment the second serrations 338 are configured as twelve evenly spaced, and generally triangle-shaped protrusions that extend radially outwardly away from the lock interface section 324. As depicted most clearly in FIG. 3, each of the second serrations 338 engages one of the first serrations 314, thus allowing the bushing 304 to be locked in a plurality of different rotational positions. With the depicted configurations of the first and second serrations 314, 338, the bushing 304 may be locked in 24 different rotational positions (i.e., at every 15-degrees of rotation).

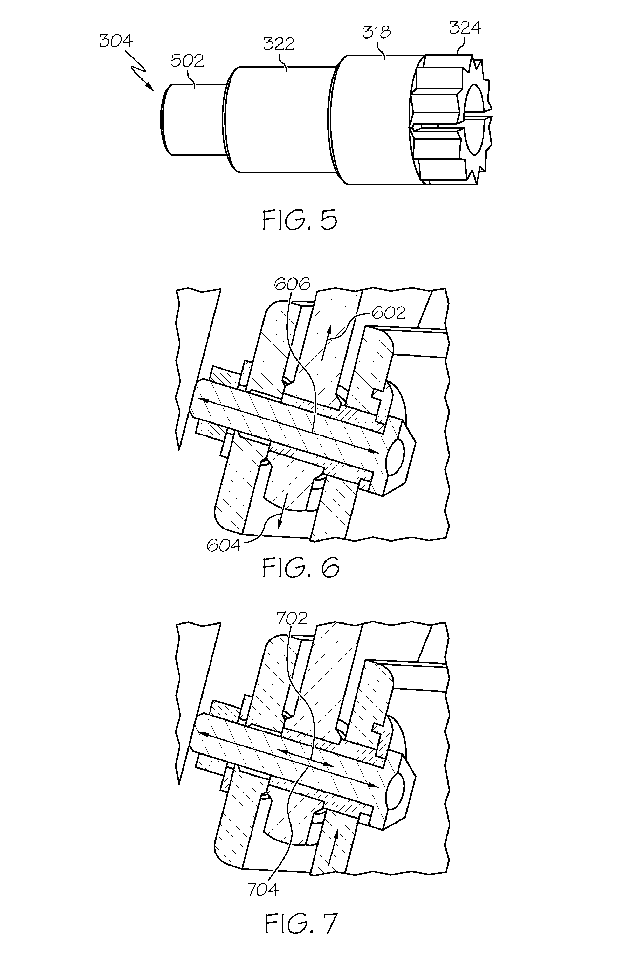

The depicted lock interface section 324 also has a plurality of slots 342 formed therein. The slots 342, which may vary in size, shape, and configuration, are each configured to be engaged by an adjustment tool. As will be explained momentarily, an adjustment tool is used to rotate the bushing 304 to a desired rotational position, so that it may then be locked in place using the locking plate 302. Before doing so, however, it is noted that the bushing 304 may be implemented with one or more additional concentric sections. The additional concentric section(s), if included, extend from the eccentric section 322, and is (are) concentric with the concentric section 318. An exemplary embodiment of a bushing 304 that includes an additional concentric section 502 is depicted in FIG. 5. Although the additional concentric section 502 in the depicted embodiment has a circumference that is less than both the concentric section 318 and the eccentric section 322, in other embodiments its circumference may be equal to or greater than either or both of these sections.

Turning now to FIG. 6, when the bushing 304 is used to mount the actuator 102 (or other component), it is disposed into and through the first opening 212 in the first arm 206 of the clevis 104, and into and through the mount opening 204 in the actuator 102. The mount lug 216 is then disposed into and through the opening 326 in the bushing 304, and into and through the second opening 214 in the second arm 208. The bushing 304 is then rotated to a desired position, preferably via a suitable adjustment tool inserted in the slots 342 in the lock interface section 324. As the bushing 304 is rotated, the eccentric section 322, which extends through the mount opening 204 in the actuator 102, will shift the actuator 102 in either a first direction 602 or a second direction 604.

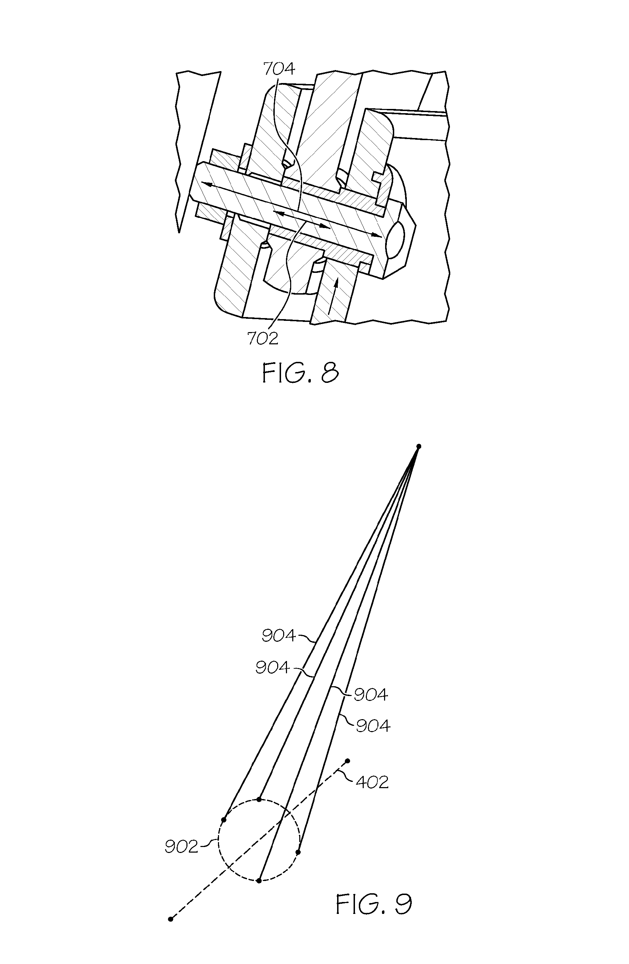

The bushing 304 may be rotated such that the central axis of the mount opening coincides with the central axis of the openings in the clevis, or such that the central axis of the mount opening is offset from the central axis of the openings in the clevis. In FIG. 6, the axes are coincident, and are thus illustrated with a single line 606. In FIGS. 7 and 8, however, the axes are offset. In particular, in FIG. 7 the central axis 702 of the mount opening is offset from the central axis 704 of the openings in the clevis in the first direction 602, and in FIG. 8 the central axis 702 of the mount opening is offset from the central axis 704 of the openings in the clevis in the second direction 604. In any case, after the bushing 304 is rotated to the desired position, and as depicted in FIG. 2, the locking plate 302 is installed onto the lock interface section 324, and the boss 316 is inserted into the lock opening 222.

The precision adjustment of the component mount position that is obtainable using the adjustable and lockable bushing assembly 220 is also illustrated in FIG. 9, which depicts the first longitudinal axis 402, various rotational positions 902 of the eccentric section 322, and the resultant actuator lengths 904 at four different rotational positions.

The adjustable and lockable bushing assembly described herein is relatively simple, non-complex, and inexpensive mounting hardware that provides adjustable component mounting capability to compensate for manufacturing and assembly tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An adjustable and lockable bushing assembly (220), comprising:
a locking plate (302) having a first side (306), a second side (308), and a bushing engagement opening (312) extending between the first and second sides (306, 308), the bushing engagement opening (312) defined by a plurality of first serrations (314);
a boss (316) extending axially from the locking plate first side (306), the boss (316) configured to engage a stationary component; and
a bushing (304) engaging the locking plate (302), the bushing (304) including a concentric section (318), an eccentric section (322), a lock interface section (324), and an opening (326), wherein:
the opening (326) has a fixed diameter and extends along a longitudinal axis (402, 404) through the concentric section (318), the eccentric section (322), and the lock interface section (324),
the concentric section (318) includes a first end (327), a second end (328), and a first outer surface (332), the first outer surface (332) having a first circumference that is concentric with the longitudinal axis (402),
the eccentric section (322) extends from the concentric section first end (327) and has a second outer surface (334), the second outer surface (334) having a second circumference that is eccentric with the longitudinal axis (404), and
the lock interface section (324) extends from the concentric section second end (328) and includes an outer surface defined by a plurality of second serrations (338), each of the second serrations (338) engaging one of the first serrations (314) that define the locking plate opening (326).

2. The assembly (220) of Claim 1, further comprising:
a plurality of slots (342) formed in the lock interface section (324), each slot (342) configured to be engaged by an adjustment tool.

3. The assembly (220) of Claim 1, wherein the first circumference is greater than the second circumference.

4. The assembly (220) of Claim 1, wherein the first and second serrations (324, 338) are evenly disposed about the bushing engagement opening (312) and the lock interface outer surface, respectively.

5. The assembly (220) of Claim 1, wherein the first and second serrations (314, 338) are configured to allow the bushing (304) to be locked in a plurality of different rotational positions.

6. The assembly (220) of Claim 5, wherein the first and second serrations (314, 338) are configured to allow the bushing (304) to be locked in 24 different rotational positions.

7. The assembly (220) of Claim 5, wherein the first and second serrations (314, 338) are configured to allow the bushing (304) to be locked at every 15-degrees of rotation.

8. A component mounting assembly, comprising:
a clevis (104) having parallel first and second arms (206, 208), the first arm (206) having a first opening (212) extending there-through and a lock opening (222) formed therein, the second arm (208) having a second opening (214) extending there-through that is concentric with the first opening (212);
a component having a mount portion (202) disposed between the first and second arms (206, 208) and having a mount opening (204) extending there-through;
a mount lug (216) extending through the first opening (212), the second opening (214), and the mount opening (204); and
an adjustable and lockable bushing assembly (220) , the adjustable and lockable bushing assembly (220) comprising:
a locking plate (302) having a first side (306), a second side (308), and a bushing engagement opening (312) extending between the first and second sides (306, 308), the bushing engagement opening (312) defined by a plurality of first serrations (314),
a boss (316) extending axially from the locking plate first side (306) and disposed within the lock opening (326),
a bushing (304) extending through at least the first opening and the mount opening (204), and surrounding at least a portion of the mount lug (216), the bushing (304) engaging the locking plate (302) , and including a concentric section (318), an eccentric section (322), a lock interface section (324), and a mount lug opening, wherein:
the mount lug (216) extends through the mount lug opening,
the mount lug opening has a fixed diameter and extends along a longitudinal axis (402) through the concentric section (318), the eccentric section (322), and the lock interface section (324),
the concentric section (318) includes a first end (327), a second end (328), and a first outer surface (332), the first outer surface (332) having a first circumference that is concentric with the longitudinal axis (402),
the eccentric section (322) extends from the concentric section first end (327) and has a second outer surface(334), the second outer surface (334) having a second circumference that is eccentric with the longitudinal axis (402), and
the lock interface section (324) extends from the concentric section second end (328) and includes an outer surface defined by a plurality of second serrations (338), each of the second serrations (338) engaging one of the first serrations (314) that define the locking plate opening (326).
